# EUROPEAN PATENT APPLICATION

(11) **EP 2 123 378 A1**
(43) Date of publication of application: **25.11.2009**
(21) Application number: 08009250.5
(22) Date of filing: 20.05.2008
(51) Int. Cl.: B23B 27/06, B23C 5/22

(54) **Tool holder, shank and insert**

(71) Applicant: VARGUS Ltd., 22311 Nahariya (IL)
(72) Inventor: Morgulis, Rafael, Karmiel (IL); Zaretsky, Artur, Nesher (IL)
(74) Representative: Patentanwälte Ruff, Wilhelm, Beier, Dauster & Partner

(57) **Abstract**

The invention relates to a tool holder comprising a shank (2, 102) and an insert (3, 103) having a front cutting edge (30), the shank (2, 102) having a shank body (21) and a clamping jaw (22) formed integrally with the shank body (21), the shank body (21) and the clamping jaw (22) being partially spaced by a slot (23), wherein a receiving opening (24) for receiving the insert (3, 103) is defined in the slot (23), the receiving opening (24) having at least partially an essentially circular cross-section and the insert (3, 103) being provided with a corresponding essentially cylindrical shaft to be inserted in the receiving opening (24).

The invention further relates to a shank (2, 102) and a cutting insert (3, 103) for a tool holder (1).

## Description

The invention relates to a tool holder, in particular to a tool holder for external threading, the tool holder comprising a shank and a cutting insert attached to the shank. The invention further relates to a shank and an insert for a tool holder, in particular for external threading.

US 5,047,648 shows a tool holder assembly or tool holder of a so-called "wedge clamping" or "spring clamping" type, comprising a shank having a base jaw or shank body and a clamping jaw defining therebetween an insert receiving opening in which a cutting insert is releasably retained. Insert abutment surfaces formed on the base jaw and the clamping jaw have a polygonal course with three adjoining surface portions and the clamping jaw has a trapezoid cross-section.

It is the object of the present invention to provide a tool holder comprising a shank and an insert, as well as a shank and an insert therefore, which are easy to manufacture and have a high rigidity.

The object is solved by a tool holder comprising a shank and an insert having a front cutting edge, the shank having a shank body and a clamping jaw formed integrally with the shank body, the shank body and the clamping jaw being partially spaced by a slot, wherein a receiving opening for receiving the insert is defined in the slot between the shank body and the clamping jaw, the receiving opening having at least partially an essentially circular cross-section and the insert being provided with a corresponding cylindrical shaft to be inserted in the receiving opening.

The receiving opening having a circular cross-section may be manufactured very easily and with high precision for example by drilling a cylindrical hole. The slot is partially separating the shank body from the clamping jaw, so that the clamping jaw is flexible with respect to the shank body. This slot may be formed first. In a subsequent manufacturing step, the cylindrical hole for the receiving opening is formed from the front face. As the surfaces of the slot are not used for positioning the insert, the slot may be formed with less precision.

In one embodiment, a transverse opening crosses the receiving opening, a sidewall of the transverse opening defining a bottom surface of the receiving opening. In other words, the sidewall of the transverse opening is used as axial stopper for the insert. A respective transverse opening may be provided with high precision and allows a precise axial positioning of the insert in the receiving opening.

In another embodiment, the insert is provided with a wedge-shaped end having a slanted surface opposite the front cutting edge, the receiving opening having a correspondingly slanted bottom surface. By providing correspondingly slanted surfaces a self-alignment function of the insert is achieved, allowing the insert to be replaced very quickly and positioned with high precision. In one embodiment, the slanted bottom surface of the receiving opening is formed by providing a transverse opening, which crosses the receiving opening at an angle corresponding to the angle of the slanted surface of the cutting insert. Thereby, the sidewall of the transverse opening is used for an angular orientation of the insert as the slanted surface of the insert is abutting against the sidewall of the transverse opening. Thus, an abutment surface for the insert is provided, which allows a precise positioning of the insert with high repeatability, while keeping manufacturing costs low.

In one embodiment, the insert is a threading cutting insert. To this purpose, the shank may be adapted for receiving the threading cutting insert. For example, the shank body may be provided with a support portion for supporting a cutting tooth of the threading cutting insert. In another embodiment, a shank may be adapted for receiving inserts of different types, e.g. to perform grooving, cutting off, threading, front turning, back turning or plunge and turning operations.

Preferably, a cutting tooth of the threading cutting insert is inclined relative to a transverse direction of the slanted surface of the insert by an angle corresponding to the helix angle of a thread, which is to be cut, as viewed from the front. The transverse direction of the slanted surface is defined as the direction parallel to the slanted surface and orthogonal to the axial direction of the insert. As mentioned above, the slanted surface is used for an angular orientation, allowing a precise orientation of the cutting tooth with respect to the holder.

In another embodiment, the shank has a forward protrusion, wherein the receiving opening for receiving the insert is provided at least partially on the forward protrusion. The forward protrusion enables deep machining operations while supporting the cutting insert, thereby improving the rigidity of the tool holder.

Preferably, the width of the forward protrusion is essentially equal to the diameter of the cylindrical shaft of the insert. Thereby, a high rigidity is provided without having to increase the overall size of the forward protrusion and/or the shank.

In one embodiment, the shank body is provided with an edge on the front face of the forward protrusion that corresponds in shape to the cutting edge of the threading insert. The edge of the shank body is preferably inclined by an angle equal to the inclination angle of the cutting insert. By providing a respective edge on the shank body, the rigidity is further enhanced.

In another embodiment, the shank and/or the insert are provided with at least one coolant channel. A coolant channel on the insert allows the coolant to be delivered to the area of the cutting edge during operation mode.

Preferably, a coolant channel of the insert opens in the slanted surface. In other words, the coolant channel of the insert is communicated with a coolant channel of the shank in the abutment area, wherein the contact between the shank and the insert prevents an outflow of coolant. Therefore, a reliable delivery of the coolant to the area of the cutting edge is achieved.

In another embodiment, the tool holder further comprises an insert screw for clamping the insert by deformation of the clamping jaw. When the shank is provided with a forward protrusion, the forward protrusion and the holes for receiving the insert screw may be laterally displaced wherein an insert screw may be provided having a diameter, which exceeds the width of the forward protrusion.

In still another embodiment, the insert and/or the clamping jaw has/have a tapered chip deflecting surface. In one embodiment, a small step is provided between a chip deflecting surface on the clamping jaw and a chip deflecting surface on the insert that functions as a chip breaker.

The object of the invention is further solved by a shank and a cutting insert for use with a respective tool holder.

In the following, embodiments of the invention will be described in detail based on several schematic drawings in which
- Fig. 1: is a perspective view of an inventive tool holder;
- Fig. 2: is an exploded view of the tool holder of Fig. 1;
- Fig. 3: is a top view of the tool holder of Fig. 1;
- Fig. 4: is a right side view of the tool holder of Fig. 1;
- Fig. 5: is a left side view of a detail of the tool holder of Fig. 1;
- Fig. 6: is a front view of the tool holder of Fig. 1;
- Fig. 7: is a perspective view of an inventive threading cutting insert;
- Fig. 8: is a perspective view of the threading cutting insert of Fig. 7 from a different angle;
- Fig. 9: is a side view of the threading cutting insert of Fig. 7;
- Fig. 10: is a front view of the threading cutting insert as seen in direction of arrow D of Fig. 9;
- Fig. 11: is a view of the threading cutting insert as seen in direction of arrow E of Fig. 9;
- Fig. 12: is a left side view of a detail of a second embodiment of an inven- tive tool holder;
- Fig. 13: is a perspective view of a threading cutting insert according to the second embodiment;
- Fig. 14: is a side view of the threading cutting insert of Fig. 13;
- Fig. 15: is a front view of the threading cutting insert as seen in direction of arrow D of Fig. 13; and
- Fig. 16: is a view of the threading cutting insert as seen in direction of arrow E of Fig. 13.

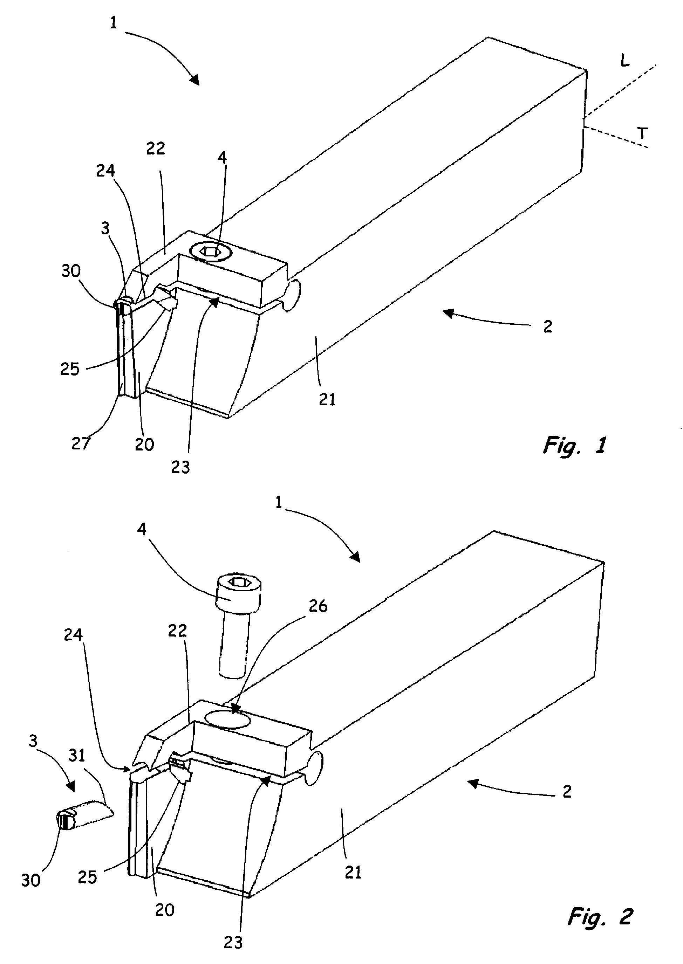

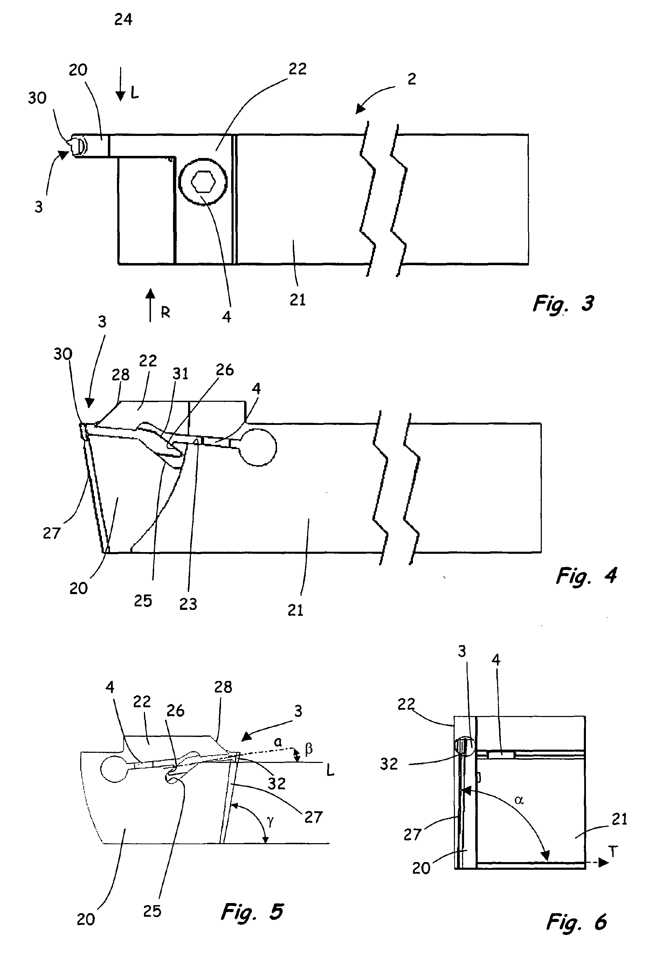

In Figs. 1 to 6 a tool holder 1 is shown, comprising a shank 2 and a cutting insert 3., wherein Figs. 1 and 2 are perspective views, Fig. 3 is a top view, Fig. 4 is a right-side view, Fig. 5 is a left-side view of a detail of the tool holder 1, and Fig. 6 is a front view of the tool holder 1.

In the embodiment shown, the shank 2 is an essentially prismatic body having an essentially quadrangular cross-section with a forward protrusion 20. The shank 2 is divided into a main part or shank body 21 and a clamping jaw 22 formed integrally with the shank body 21. The shank body 21 and the clamping jaw 22 are spaced by a slot 23, the clamping jaw 22 being flexible with respect to the shank body 21. At the back, the slot 23 transforms into a cylindrical through hole. A receiving opening 24 for releasably retaining the insert 3 is defined between the shank body 21 and the clamping jaw 22. The clamping jaw 22 has a tapered surface 28 functioning as chip deflecting surface.

A screw 4 is provided for fixing the insert 3 to the shank 2, wherein by tightening the screw 4 the clamping jaw 22 is clamped to the shank body 21. A screw hole 26 for receiving the screw 4 is offset from the forward protrusion 20 in a transverse direction T of the shank 2. Thereby, the dimensions or the diameter for the screw hole may exceed the width of the forward protrusion 20.

In accordance with the invention, the receiving opening 24 has a circular cross-section extending essentially in a longitudinal direction L of the shank 2. The insert 3 has an essentially cylindrical shaft. The diameter of the shaft corresponds to the circular cross-section of the receiving opening 24. The cutting insert 3 is provided with a front cutting edge 30 and a wedge-shaped end having a slanted surface 31 opposite the front cutting edge 30. The receiving opening 24 has a correspondingly slanted bottom surface 26, wherein the bottom surface of the receiving opening 24 is used for angular orientation and as axial stopper for the insert 3.

In the embodiment shown in Figs. 1 to 6, a transverse opening 25 crossing the receiving opening 24 is provided, wherein a sidewall 26 (as shown in Figs. 4 and 5) of the transverse opening 25 defines the bottom surface of the receiving opening 24. A respective receiving opening 24 with a circular cross-section and a slanted bottom surface may be manufactured with high precision.

The forward protrusion 20 allows the tool holder 1 to be used in deep machining operations. In the embodiment shown, the width of the forward protrusion 20 is essentially equal the diameter of the shaft of the cutting insert 3. Thereby the rigidity of the tool holder 1 is increased.

The insert 3 of the depicted first embodiment is a threading insert having a cutting tooth 32 on which the front cutting edge 30 is provided. In order to enhance the rigidity, the forward protrusion 20 is provided with an edge 27 corresponding to the cutting tooth of the insert 30. As may be best seen in the front view of Fig. 6, the supporting edge 27 and the cutting tooth 32 are inclined by an angle α relative to the transverse direction T, which is the feed direction of the tool holder 1. In other words, the angle α corresponds to the helix angle of a thread to be cut with the insert 3, wherein the helix angle is 90° - α.

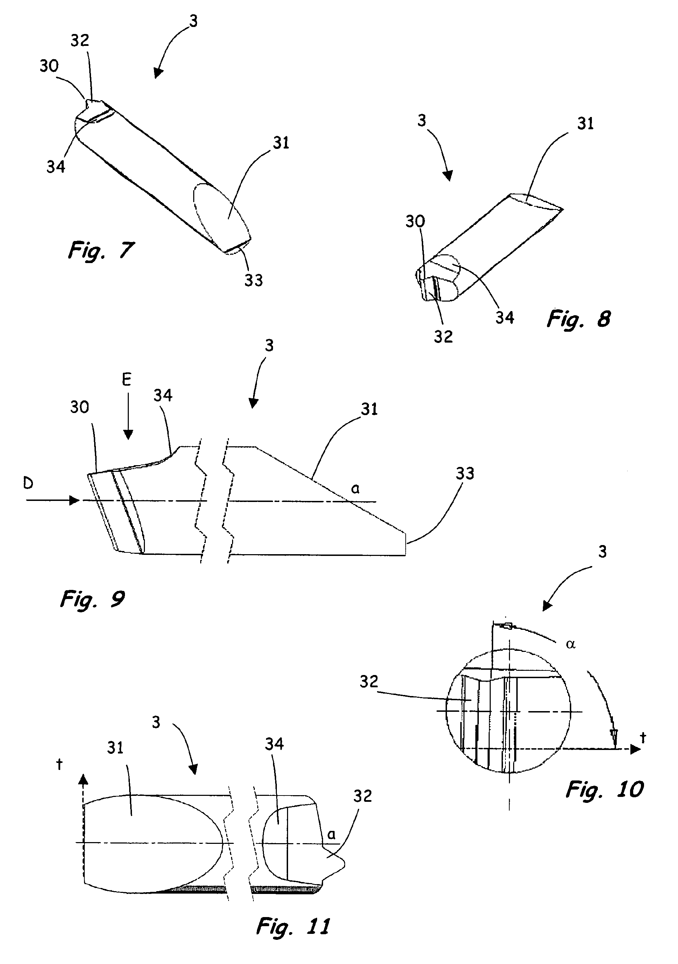

As may be best seen in Fig. 5, when inserted in the shank 2, the axial direction a of the insert 3 is inclined with respect to the longitudinal direction L of the shank 2 by an angle β. The angle β could lie substantially in the range of 5° to 15°. The leading edge of the shank 2 and the insert 3 retained therein are inclined relative to the longitudinal direction L of the shank 2 by an angle γ. Preferably, the angle γ is about 80° to about 90°. The insert 3 is described in more detail with respect to Figs. 7 to 11, wherein Fig. 7 and 8 are perspective views, Fig. 9 is a side view, Fig. 10 is a view of the cutting insert as seen in a direction of arrow D of Fig. 9, and Fig. 11 is a view of the cutting insert as seen in a direction of arrow E of Fig. 9.

The insert 3 shown in the figures is a threading cutting insert, wherein the cutting edge 30 is provided on a cutting tooth 32. The threading cutting insert 3 has an essentially cylindrical shaft, wherein on one end of the shaft the cutting tooth 32 is provided and on the second end a slanted surface 31 is provided. In order to avoid an undesired double fit, the slanted surface 31 is provided with a step 33. A chip deflecting surface 34 is provided downstream of the cutting tooth 32. The length of the insert 3 may be chosen in accordance with an application and the length may be adapted to the length of the forward protrusion 20 of the tool holder 1 shown in Figs. 1 to 6.

As may be best seen in Fig. 10, the cutting tooth 32 of the threading cutting insert 3 is inclined by an angle α relative to the transverse direction t of the insert 3. The transverse direction t is defined as the direction parallel to the slanted surface 31 and orthogonal to the axial direction a of the insert. The transverse direction t of the insert 3 is in parallel with the transverse direction T of the shank 2.

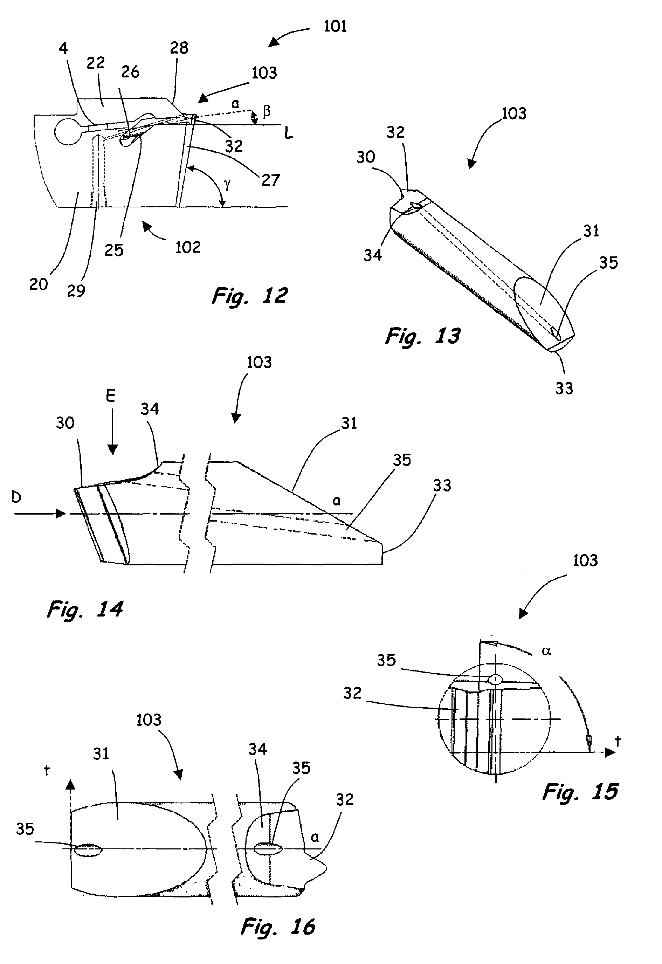

Fig. 12 is a left side view of a detail similar to Fig. 5 of a second embodiment of an inventive tool holder 101 comprising a shank 102 and an insert 103. The shank 102 and the insert 103 are essentially equal to the shank 2 and the insert 3 of Figs. 1 to 11, respectively, and the same or similar elements will be denoted by the same reference numerals. A detailed description of these elements is avoided.

In accordance with the second embodiment, the shank 102 and the insert 103 are each provided with a coolant channel 29, 35. The coolant channels 29, 35 meet in the area of the slanted surface 31. Due to the contact of the insert 103 with the shank 102 in the area of the slanted surface 31, an outflow of the coolant is prevented or at least kept to a minimum. This enables the coolant to be delivered to the cutting edge 30 of the insert 103.

The insert 103 is shown in more detail in Figs. 13 to 16, wherein Fig. 13 shows a perspective view, Fig. 14 is a side view, Fig. 15 is a front view as seen in direction of arrow D of Fig. 13, and Fig. 16 is a view as seen in direction of arrow E of Fig. 13 of the threading cutting insert 103.

In the embodiment shown, one coolant channel 35 is provided that extends from the slanted surface 35 to the front end of the insert 103, more precisely to a junction of the chip deflecting surface 35 and the cutting tooth 32. This allows a good delivery of coolant to the cutting edge 30, without weakening the cutting tooth 32.

## Claims

1. Tool holder comprising a shank (2, 102) and an insert (3, 103) having a front cutting edge (30), the shank (2, 102) having a shank body (21) and a clamping jaw (22) formed integrally with the shank body (21), the shank body (21) and the clamping jaw (22) being partially spaced by a slot (23), wherein a receiving opening (24) for receiving the insert (3, 103) is defined in the slot (23), **characterized in that** the receiving opening (24) has at least partially an essentially circular cross-section and the insert (3, 103) is provided with a corresponding essentially cylindrical shaft to be inserted in the receiving opening (24).

2. Tool holder according to claim 1, **characterized in that** a transverse opening (25) crosses the receiving opening (24), a sidewall of the transverse opening (25) defining a bottom surface of the receiving opening (24).

3. Tool holder according to claim 1 or 2, **characterized in that** the insert (3, 103) is provided with a wedge-shaped end having a slanted surface (31) opposite the front cutting edge (30), the receiving opening (24) having a correspondingly slanted bottom surface (26).

4. Tool holder according to any of the claims 1 to 3, **characterized in that** the insert (3, 103) is a threading cutting insert with at least one cutting tooth (32).

5. Tool holder according to claim 4, **characterized in that** the at least one cutting tooth (32) of the threading cutting insert (3, 103) is inclined relative to a transverse direction (t) of the slanted surface (31) of the insert (3, 103) by an angle (α) corresponding to the helix angle of a thread to be cut, as viewed from the front.

6. Tool holder according to any of claims 1 to 5, **characterized in that** the shank (2, 102) has a forward protrusion (20), wherein the receiving opening (24) is provided at least partially on the forward protrusion (20).

7. Tool holder according to claim 6, **characterized in that** the width of the forward protrusion (20) is essentially equal to a diameter of the cylindrical shaft of the insert (3, 103).

8. Tool holder according to claim 6 or 7, **characterized in that** the shank body (21) is provided with an edge (27) on the forward protrusion (20) that corresponds in shape, dimension and/or orientation to the cutting tooth (32) of the insert (3, 103).

9. Tool holder according to any of claims 1 to 8, **characterized in that** the shank (102) and/or the insert (103) are provided with at least one coolant channel (29, 35).

10. Tool holder according to claim 9, **characterized in that** the coolant channel (35) of the insert (103) opens in the slanted surface (31).

11. Tool holder according to any of claims 1 to 10, further comprising a screw (4) for clamping the insert (3, 103) by deformation of the clamping jaw (22).

12. Tool holder according to any of claims 1 to 11, **characterized in that** the insert (3, 103) and/or the clamping jaw (22) has/have a tapered chip deflecting surface (28, 34).

13. Shank for use with a tool holder (1) according to any of the claims 1 to 12.

14. Insert for use with a tool holder (1) according to any of the claims 1 to 12.
